Europäisches Patentamt

European Patent Office

Office européen des brevets

(11) Veröffentlichungsnummer: **0 251 043**
**A2**

(19)

(12) # EUROPÄISCHE PATENTANMELDUNG

(21) Anmeldenummer: 87108745.8

(22) Anmeldetag: 19.06.87

(51) Int. Cl.³: **G 11 B 7/24**

(30) Priorität: 01.07.86 DE 3622005

(43) Veröffentlichungstag der Anmeldung:
07.01.88 Patentblatt 88/1

(84) Benannte Vertragsstaaten:
**DE FR GB NL**

(71) Anmelder: **BAYER AG**
**Konzernverwaltung RP Patentabteilung**
**D-5090 Leverkusen 1 Bayerwerk(DE)**

(72) Erfinder: **Gütlich, Philipp, Prof. Dr.**
**Georg-Büchner-Strasse 9**
**D-6101 Rossdorf 1(DE)**

(72) Erfinder: **Decurtins, Silvio, Dr.**
**Bahnhofstrasse**
**CH-7231 Pragg-Jenaz(CH)**

(72) Erfinder: **Spiering, Hartmut, Dr.**
**Am Damsberg 86**
**D-6500 Mainz(DE)**

(72) Erfinder: **Hauser, Andreas**
**Birkenweg 25L**
**CH-3118 Uttingen(CH)**

(54) Verwendung von chemischen Substanzen, die den LIESST-Effekt zeigen, in optischen Aufzeichnungsmedien.

(57) Die Erfindung betrifft die Verwendung von chemischen Substanzen, die en "LIESST-Effekt" zeigen und ihre Verwendung zur optischen Signalspeicherung.

EP 0 251 043 A2

Croydon Printing Company Ltd.

BAYER AKTIENGESELLSCHAFT                5090 Leverkusen, Bayerwerk
Konzernverwaltung RP                    RW/Sts
Patentabteilung

                                       30. Juni 1986


Verwendung von chemischen Substanzen, die den LIESST-
Effekt zeigen, in optischen Aufzeichnungsmedien

---

Die Erfindung betrifft die Verwendung von chemischen
Substanzen, die den "LIESST-Effekt" zeigen und ihre Verwendung zur optischen Signalspeicherung.

Bekannte optische Speichermedien leiden alle unter dem
Nachteil der mangelhaften oder unmöglichen Änderungsmöglichkeit einmal aufgezeichneter Informationen. Dies
gilt sowohl für magneto-optische Speicherverfahren (z.B.
Tb-Schichten) als auch für Laser-Loch-Brenn-Verfahren
(CD-Platten). (G. Kämpf, Ber. Bunsenges. physik. Chem.
89 (1985), S. 1179-1190).

Der LIESST-Effekt "Light Induced Excited Spin State
Trapping" ist ein neuer photophysikalischer Effekt, der
erstmals im Jahre 1983 an sogenannten "Spincrossover-
Verbindungen des Eisens in der Oxidationsstufe +2 beobachtet wurde (1. S. Decurtins, P. Gütlich, C.P. Köhler,
H. Spiering, Chem. Phys. Letters 105, 1984, S. 1-4, 2.
2. S. Decurtins, P. Gütlich, K.M. Hasselbach, A. Hauser,
H. Spiering, Inorg. Chem. 24, 1985, S. 2174-2178.


Le A 24 402 - Ausland

- 2 -

3. S. Decurtins, P. Gütlich, C.P. Köhler, H. Spiering,
J. Chem. Soc. Chem. Commun., 1985, S. 430-432).

Er beruht auf einem lichtinduzierten Übergang von Übergangsverbindungen mit Spincrossover-Eigenschaften.

Spincrossover-Verbindungen sind Übergangsmetallverbindungen, die temperaturabhängig ihren Spinzustand
ändern können, d.h. bei hinreichend tiefen Temperaturen
liegt der Low Spin (LS)-Zustand und bei höheren Temperaturen der High Spin (HS)-Zustand vor. Dieser Übergang
vom einen zum anderen Spin-Zustand kann von System zu
System mehr oder weniger abrupt erfolgen. Manchmal ist
mit diesem Spinübergang ein kristallographischer Phasenübergang verbunden. Der Spinübergang als Funktion der
Temperatur kann mit verschiedenen Meßtechniken verfolgt
werden, wie beispielsweise Mößbauer-Spektroskopie, magnetische Suszeptibilitäts- und kalorimetrische Messungen,
UV- und Schwingungsspektroskopie. Mit dem Spinübergang ist
eine charakteristische Farbänderung verbunden. Diesen Vorgang bezeichnet man als Thermochromie.

Das Spinübergangsverhalten kann durch chemische Veränderungen am System (Metallverdünnung, Ligandensubstitution,
Anionenaustausch, Solvatmolekülaustausch u.a.) und
physikalisch (Druck, Magnetfeld) beeinflußt werden
(P. Gütlich, Struct. Bonding (Berlin), Vol. 44, 1981,
S 83 ff).

Le A 24 402

Bei spektroskopischen Untersuchungen an diesen Verbindungen wurde überraschenderweise ein bis dahin unbekannter
photophysikalischer Effekt, LIESST-Effekt, beobachtet.

Bei hinreichend tiefen Temperaturen kann der LS-Zustand
durch Lichteinstrahlung quantitativ in den HS-Zustand
überführt werden. Damit ist derselbe drastische Farbwechsel verbunden, wie er durch den temperaturabhängigen
Spinübergang im höheren Temperaturbereich beobachtet wird.
Der lichtangeregte HS-Zustand wird in einem Potential
"festgehalten", aus dem er nur thermisch, nicht aber
strahlend, in den Ausgangszustand zerfallen kann. Dieser
Zustand hat unterhalb kritischer Temperaturen praktisch
unbegrenzte Lebensdauer ($T < T_{krit.}$).

Durch Einstrahlung von Licht geeigneter Wellenlänge, beispielsweise rotem Licht oder durch Aufheizen über eine
kritische Temperatur kann der lichtangeregte HS-Zustand
wieder in den LS-Zustand überführt werden.

Der LIESST-Effekt eröffnet so die Möglichkeit, Signale
auf optischem Wege zu speichern und wieder auszulöschen
und dies mit größerer Schnelligkeit als bei bekannten
Verfahren, z.B. Loch-Brenn- oder Blochwand-Speicher
( s. G. Kämpf, Ber. Bunsenges. physik. Chem. <u>89</u> (1985),
S. 1179-1190). Die vorliegende Erfindung betrifft somit
die Verwendung von chemischen Substanzen, die den LIESST-
Effekt zeigen, zur optischen Signalspeicherung, im
folgenden auch LIESST-Substanzen genannt.

<u>Le A 24 402</u>

- 4 -

Als chemische Substanzen kommen Komplexverbindungen von Übergangsmetallionen, bevorzugt der 3d-Reihe des chemischen Periodensystems,in Frage.

Die Signalspeicherung erfolgt über Einstrahlen von Licht einer Wellenlänge, die einen Übergang vom LS- in den HS-Zustand bewirkt. Dabei kommt es zu einem drastischen Farbwechsel.

Neben der Signalspeicherung ist auch die Möglichkeit zur Signallöschung gegeben. Die Signallöschung kann einerseits bei konstanter Temperatur mit Licht erfolgen. Dabei wird Licht einer anderen Wellenlänge eingestrahlt als zur Signalspeicherung verwendet wurde. Andererseits kann diese Signallöschung durch Aufheizen über eine kritische Temperatur ($T_{krit.}$) durchgeführt werden.

Ein weiterer Gegenstand der Erfindung ist ein optisches Signalaufzeichnungsmedium, bestehend aus mehreren Schichten, welches dadurch gekennzeichnet ist, daß auf einer klaren Schicht eine oder mehrere Schichten aufgebracht werden, in die eine oder mehrere den LIESST-Effekt aufweisende chemische Substanzen eingearbeitet sind.

Unter einem optischen Signalaufzeichnungsmedium werden sowohl nach digitalem Prinzip arbeitende Medien als auch nach einem photographischen Bildentstehungsprozeß arbeitende Vorrichtungen verstanden. Bei letzteren wird durch optische Abbildung in dem Medium ein reales Abbild des zu speichernden Bildes geschaffen.

Le A 24 402

Das digitale Prinzip wird bei der Bit-weisen Speicherung von Informationen jeglicher Art angewandt.

Als chemische Substanzen werden Komplexverbindungen von Übergangsmetallionen, vorzugsweise Eisen- und/oder Kobalt-Komplexverbindungen eingesetzt.

Besonders bevorzugt werden Eisen-Komplexverbindungen, in denen das Eisen die Oxidationsstufe +2 aufweist.

Le A 24 402

Eine mögliche Anordnung kann in einer dünnen Schicht der beschriebenen Substanzen auf einem klaren Träger bestehen. Als Trägermaterial kommen z. B. optische Gläser oder klare Kunststoffe, z. B. Polycarbonat in Betracht. Durch gebündeltes Laserlicht der geeigneten Wellenlänge kann dann in Form kleiner Flecken entsprechend den Bits ähnlich der Ausführung bekannter optischer Verfahren zur Signalspeicherung (z. B. Video Disc oder CD-Platte) die zu speichernde Information niedergelegt werden und in Durchstrahlung oder Reflexion wieder gelesen werden. Eine Bit-weise Löschung ist mit geeigneter Laserstrahlung der 2. Wellenlänge möglich. Eine totale Löschung ist durch einfaches Erhitzen auf $T > T_{krit.}$ möglich.

Es ist sogar möglich, in einen Speicherflecken mehrere Informationen niederzulegen, wenn mehrere, den LIESST-Effekt in unterschiedlicher Weise zeigende Substanzen in die Speicherschicht eingearbeitet werden, und die Abtastung mittels eines Spektral-empfindlichen Detektors durchgeführt wird.

Die maximale Speicherdichte wird nur durch die Auflösung der heutigen Laserlichtquellen bestimmt und liegt größenordnungsmäßig heute bei ca. $1 \times 1 \ \mu m^2$.

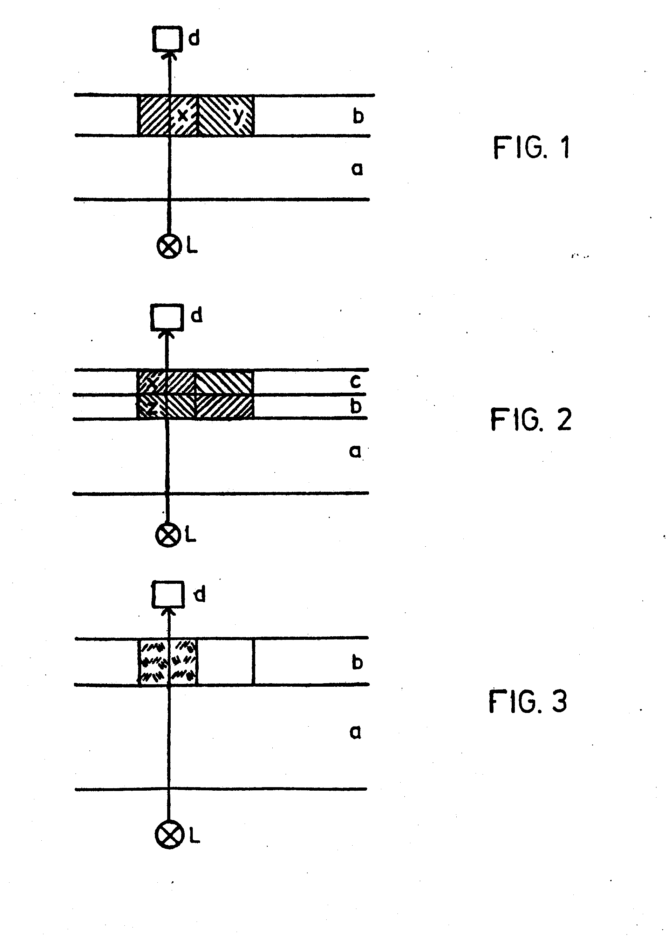

Zur Erläuterung ist in Fig. 1 das Prinzip des Auslesens der Information mit einer LIESST-Substanz und in Fig. 2 derselbe Vorgang bei einer Schicht mit zwei LIESST-Substanzen dargestellt. a ist der klare Träger und b bzw. b und c die Speicherdichte, x, y und z sind die Speicherflecken.

Le A 24 402

Es ist nicht notwendig, die verschiedenen LIESST-Substanzen in getrennten Schichten aufzubringen. Aufgrund des spektralen Prinzips der Wirkung können sie auch in einer Schicht gemischt vorliegen (Fig. 3). d symbolisiert den Strahlungsdetektor und L die Strahlungsquelle.

Geeignete Substanzen sind z. B.:

a. $\left[\text{Fe}(2\text{-aminomethylpyridin})_3\right]$ $\text{Cl}_2$ . EtOH

b. $\left[\text{Fe}(1,10\text{-Phenanthrolin})_2\,(\text{NCS})_2\right]$

c. $\left[\text{Fe}(1\text{-propyltetrazol})_6\right]$ $(\text{BF}_4)_2$

Die Detektion der gespeicherten Signale kann im Falle der Substanz c mit Hilfe der Absorptionsmaxima des LS-Zustandes bei 18400 $\text{cm}^{-1}$ bzw. 26650 $\text{cm}^{-1}$ erfolgen.

<u>Le A 24 402</u>

Patentansprüche

1. Verwendung von chemischen Substanzen, die den LIESST-Effekt zeigen, zur optischen Signalaufzeichnung.

2. Optisches Signalaufzeichnungsmedium, bestehend aus mehreren Schichten, dadurch gekennzeichnet, daß auf einer klaren Schicht eine oder mehrere Schichten aufgebracht werden, in die eine oder mehrere den LIESST-Effekt aufweisende chemische Substanzen eingearbeitet sind.

3. Optisches Signalaufzeichnungsmedium nach Anspruch 2, dadurch gekennzeichnet, daß Komplexverbindungen von Übergangsmetallionen eingesetzt werden.

4. Optisches Signalaufzeichnungsmedium nach Anspruch 2 oder 3, dadurch gekennzeichnet, daß die verwendeten chemischen Substanzen Eisen- und/oder Kobalt-Komplexverbindungen sind.

5. Optisches Signalaufzeichnungsmedium nach einem der Ansprüche 2 bis 4, dadurch gekennzeichnet, daß die verwendeten chemischen Substanzen Eisen-Komplexverbindungen sind, in denen das Eisen die Oxidationsstufe +2 aufweist.

Le A 24 402

FIG. 1

FIG. 2

FIG. 3